# EUROPEAN PATENT SPECIFICATION

(11) **EP 4 431 887 B1**
(45) Date of publication and mention of the grant of the patent: **09.12.2026**
(21) Application number: 24163555.6
(22) Date of filing: 14.03.2024
(51) Int. Cl.: G01J 5/02

(54) **TEMPERATURE MEASURING GUN**
TEMPERATURMESSPISTOLE
PISTOLET DE MESURE DE TEMPÉRATURE

(30) Priority: 14.03.2023 CN 202320543960 U; 05.12.2023 CN 202323304320 U
(43) Date of publication of application: 18.09.2024
(73) Proprietor: Ningbo Deli Tools Co., Ltd., Ningbo, Zhejiang 315600 (CN)
(72) Inventor: NI, Wenjian, NINGBO, 315600 (CN); ZHAO, Zeen, NINGBO, 315600 (CN)
(74) Representative: Lavoix

(56) References cited:
- CN-A- 107 144 357
- CN-A- 112 816 077
- GB-A- 2 488 720
- US-A1- 2015 211 941
- US-A1- 2018 227 007

## Description

### TECHNICAL FIELD

The present application relates to the technical field of temperature measuring guns, in particular to a temperature measuring gun.

### BACKGROUND

GB2488720A relates to a test and measurement device includes a main body having a first axis and an oblique handle having a second axis, the handle including a recess for a removable, rechargeable battery pack. The recess includes terminals to engage corresponding contacts on the battery pack: when the battery pack is removed, the terminals are exposed, and when the battery pack is fitted the terminals are covered by the battery pack.

US2015211941A1 concerns an apparatus, which has a non-contact thermometer and an exterior having antimicrobial characteristics.

CN107144357A relates to a wireless charging electronic thermometer including a housing and a sensing rod and also including a battery part and a charging base. The front end of the sensing rod is provided with a temperature sensor. The surface of the housing is provided with a liquid crystal display screen and a power source switch.

US2018227007A1 concerns a secure portable patrol system including a portable patrol device and a base unit is revealed. The patrol device is a portable rectangular body disposed with a multi-image display screen on a front surface thereof. The patrol device is disposed with an IR image capture unit, a wireless call unit and a first SIM card communication unit so that users can perform multiple tasks by the single patrol device such as checking whether there is area that overheats or abnormal conditions that occur.

CN112816077A concerns an infrared thermometer and a multi-station storage mechanism, and belongs to the technical field of temperature detection.

A temperature measuring gun can directly detect a temperature of an object in a non-contact state and has quite broad application scenes, a bottom of a handle of a common temperature measuring gun is horizontal, which conveniently supports the temperature measuring gun uprightly during use and makes it convenient to take for a user, however, the type of temperature measuring gun has a heavy head, if a horizontal supporting surface is arranged at the bottom of the handle, the entire temperature measuring gun is in a top-heavy state and is prone to falling during gentle shaking, in addition, the existing temperature measuring gun is usually battery powered or repeatedly charged by using a lithium battery, and can be charged only when it is connected to a charging interface in the case of charging, and a charging cable is difficult to store.

Therefore, those skilled in the art provide a temperature measuring gun base charging structure and a temperature measuring gun applying the same, so as to solve the problems raised in the above background.

### SUMMARY OF THE INVENTION

In a first aspect, an objective of the present application is to provide a temperature measuring gun according to claim 1. The dependent claims set out particular embodiments of the invention.

Compared with the prior art, the present application has the following beneficial effects.

By arranging the placement cavity with the oblique inner wall, a lower end of the temperature measuring gun may be placed in the placement cavity, and the temperature measuring gun is placed obliquely and uprightly, which is not prone to falling and convenient to take for use; the soft rubber pad is arranged at the base bottom, and the base is placed more stably by making the soft rubber pad contact with a desktop; after the temperature measuring gun is placed in the placement cavity, the temperature measuring gun can be charged by making a charging port of the temperature measuring gun be in abutting joint with the charging interface; and by forming the winding cavity in the lower surface of the base bottom, the charging cable can be winded on the winding post for taking up the charging cable, and meanwhile, the charging cable can also be prevented from slipping off and becoming scattered by using the limiting member.

### BRIEF DESCRIPTION OF THE DRAWINGS

FIG. 1 is a solid diagram of a first embodiment of a temperature measuring gun base charging structure.
FIG. 2 is a schematic internal structural diagram of a first embodiment of a temperature measuring gun base charging structure.
FIG. 3 is a solid diagram of a temperature measuring gun.
FIG. 4 is a solid diagram of a second embodiment of a temperature measuring gun base charging structure.

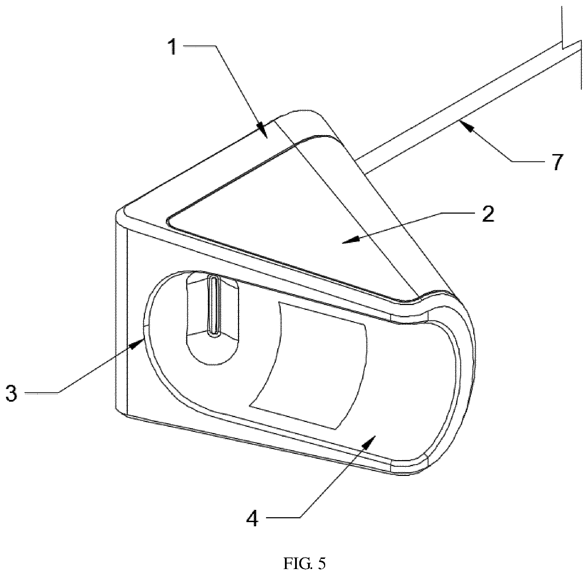

FIG. 5 is a schematic internal structural diagram of a second embodiment of a temperature measuring gun base charging structure.

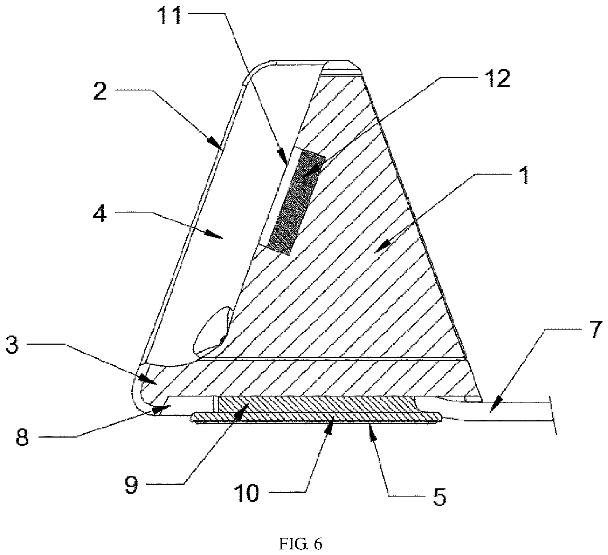

FIG. 6 is a schematic structural sectional view of a temperature measuring gun along an axis thereof.

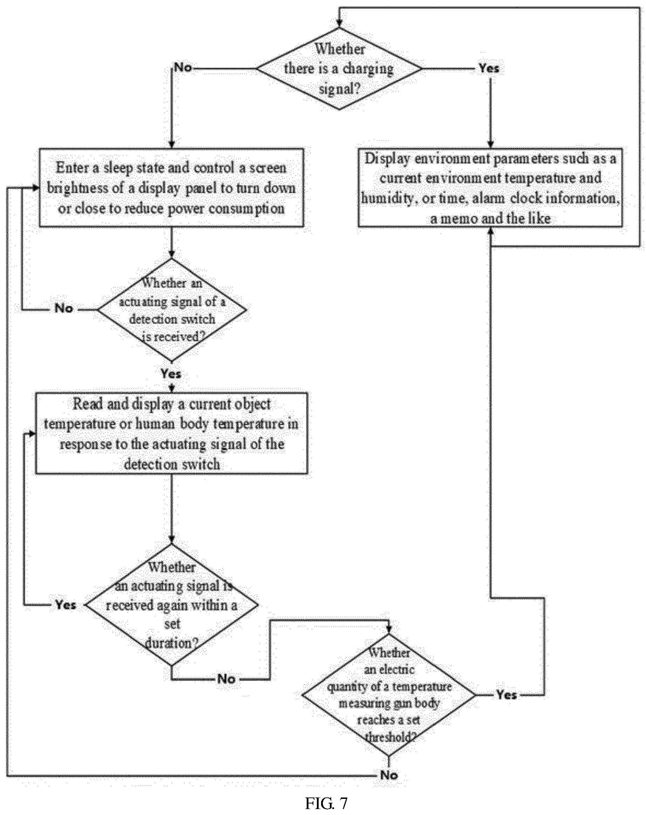

FIG. 7 is a diagram of an operating principle of a temperature measuring gun.

In the figures: 1, base; 2, base side wall; 3, base bottom; 4, placement cavity; 5, soft rubber pad; 6, charging interface; 7, charging cable; 8, winding cavity; 9, winding post; 10, limiting member; 11, wireless charging coil; 13, magnet; 14, magnetic conductor; 15, display panel; 16, detection switch; 17, environment detector; and 18, pin.

### DETAILED DESCRIPTION

The present application is further described below with reference to the accompanying drawings and embodiments. Some exemplary embodiments of the present application are described only in a form of explanation in the following detailed description. Undoubtedly, those ordinarily skilled in the art can realize that the described embodiments can be modified in various different ways without departing from the scope of the present application as defined by the appended claims. Therefore, the accompanying drawings and the description are explanatory essentially instead of being used for limiting the protection scope of the claims.

### Embodiment 1:

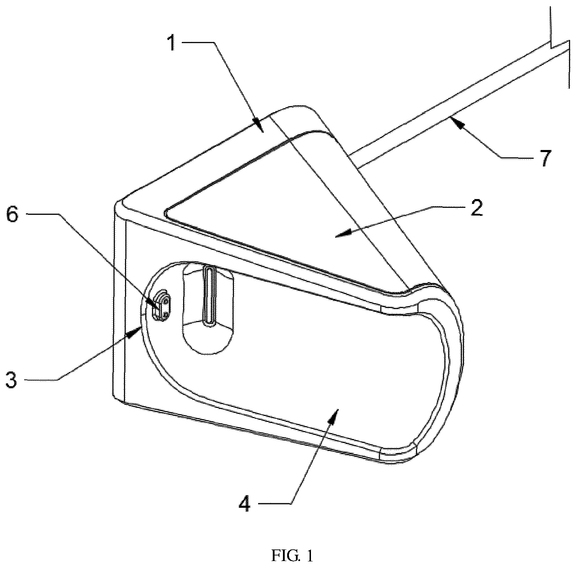

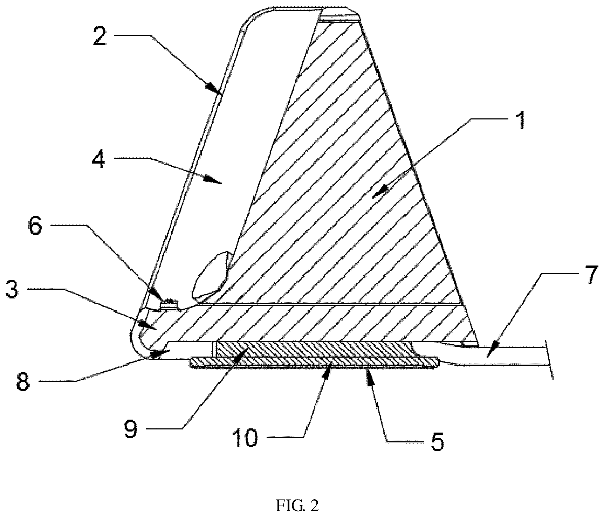

Please refer to FIGS. 1 to 2, a temperature measuring gun base charging structure includes a base 1, a base bottom 3 is integrally formed on a lower side of the base 1, a placement cavity 4 is formed in one side of an upper portion of the base 1, base side walls 2 are arranged on other side surfaces of the base 1, heights of the base side walls 2 on all the sides are preferably the same, the same height may play a good role in supporting a temperature measuring gun and prevent the temperature measuring gun from falling, and supporting effects on the temperature measuring gun in all directions are consistent. A charging module is arranged in the placement cavity 4 and includes a charging interface 6, and the charging interface 6 is located at a bottom surface of the placement cavity 4 and is electrically connected with a charging cable 7.

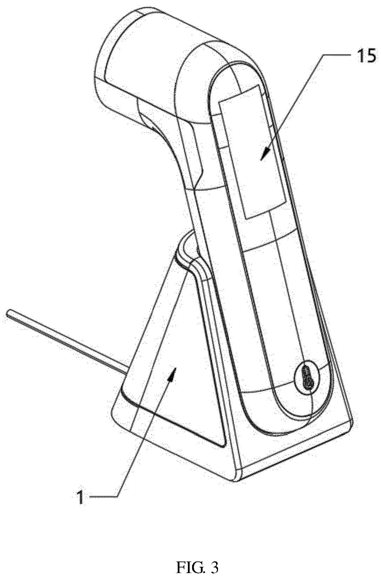

Refer to FIG. 1 and FIG. 3, this embodiment further discloses a temperature measuring gun, including a temperature measuring gun body and the temperature measuring gun base charging structure described above, and the temperature measuring gun body is in an L shape and mainly divided into a gun head configured to detect a temperature and a handle configured to cooperate with holding, and the gun head is shorter than the handle. A charging port is formed in a bottom end of the handle of the temperature measuring gun body, and when the charging port at a bottom of the temperature measuring gun body is in abutting joint with the charging interface 6 at a bottom of the placement cavity 4, the temperature measuring gun body can be charged in real time.

Preferably, an inner wall of the placement cavity 4 is arranged obliquely in an oblique direction back on to a run-through direction of the placement cavity 4, and when the temperature measuring gun body is placed in the placement cavity 4, the temperature measuring gun body may incline towards a side oriented to the placement cavity 4 and is not prone to falling.

Preferably, the charging interface 6 is of a pin structure or a typeC interface structure, and preferably, the charging interface in this embodiment is a pin 18 having elasticity, a conductive copper sheet is arranged in the charging port of the temperature measuring gun body, and thus the temperature measuring gun body can be convenient to take and put down.

Preferably, a winding cavity 8 is formed in a lower surface of the base bottom 3, a winding post 9 is fixedly arranged in the winding cavity 8, a limiting member 10 is fixedly arranged on a lower side surface of the winding post 9, the charging cable 7 may be winded on the winding post 9 for storage, and meanwhile, the charging cable 7 can be prevented from slipping off and becoming scattered by using the limiting member 10.

Preferably, a soft rubber pad 5 is fixedly connected with a lower side surface of the limiting member 10, a lower surface of the soft rubber pad 5 is flush with the lower surface of the base bottom 3, and an effect of shock absorption and wear resistance can be achieved by making the lower surface of the soft rubber pad 5 contact with a plane such as a desktop.

In the way of base charging, it can be guaranteed that the temperature measuring gun body stands, a display interface conveniently faces a user, observation of a parameter is convenient, the temperature measuring gun body is convenient to directly take, and wear of the gun head caused by laying up on the desktop is reduced; and it can be guaranteed that the temperature measuring gun body remains fully charged at all time for unexpected needs. For example, a hospital guidance station, a fever outpatient department and the like usually need to frequently use a temperature measuring gun, resulting in serious electric consumption of the temperature measuring gun. A conventional lithium battery temperature measuring gun needs to be charged by repeatedly plugging and unplugging a power cable, and a battery design capacity of the lithium battery temperature measuring gun is high, which leads to that the temperature measuring gun is heavy and inconvenient to use, but in the way of base placement charging, a battery design capacity of the temperature measuring gun body may be reduced, the temperature measuring gun body may adopt a smaller and lighter built-in battery, thus a volume weight of the temperature measuring gun is reduced, and holding comfort is improved. Meanwhile, the frequency of plugging and unplugging the power cable is reduced, interface loss is reduced, an operation procedure is simplified, and greater conveniences are provided.

In other embodiments, a battery may also be arranged in the base 1, so the base 1 can be conveniently taken away together with the temperature measuring gun body, which is suitable for being carried outwards, making it convenient to take and realizing portable charging.

A detection switch 16 is arranged on a side, close to the gun head, of the handle of the temperature measuring gun body, when the temperature measuring gun body is placed in the placement cavity 4, the detection switch 16 is located outside the placement cavity 4 and is higher than the base 1, in this case, a space between the gun head and the base 1 is no less than 1 cm, and a width of a finger is reserved between the gun head and the base 1, so a user conveniently extends his finger to touch the detection switch 16 and meanwhile conveniently holds the handle to take the temperature measuring gun body out of the base 1.

### Embodiment 2:

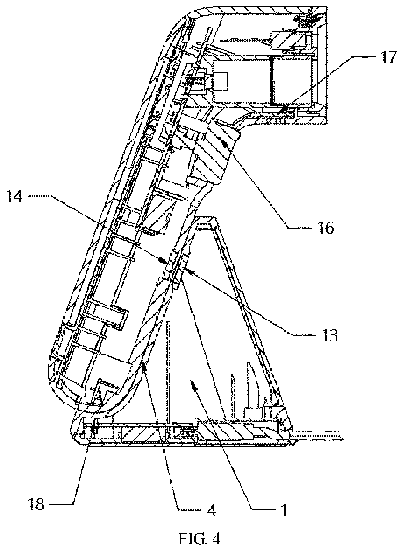

Please refer to FIGS. 3 to 4, a temperature measuring gun base charging structure, a difference of which from Embodiment 1 is that the charging structure is in a wireless charging mode, includes a wireless charging coil 11 installed in a base, a receiving coil on a surface of a temperature measuring gun is close to the wireless charging coil 11, the temperature measuring gun can be charged in real time, and the rest of parts are the same as Embodiment 1.

In the wireless charging mode, time needed for aligning a conductive copper sheet on the temperature measuring gun with a pin 18 can be reduced, and put-and-charge is realized. Meanwhile, in order to make a temperature measuring gun keep clean, water-proof and dust-proof, prevent it from falling or reduce wear and greasiness, a user or a manufacturer may wrap a shell of the temperature measuring gun with a rubber layer, a silicon rubber case or a plastic sealing film, existence of a rubber sleeve or the plastic sealing film causes higher difficulty of wired charging, for example, alignment with the pin 18 fails, disconnection is prone to occurring, which leads to poor contact, but wireless charging can perfectly solve the above problems, is lower in threshold of use conditions and is high in applicability.

A placement cavity 4 is open, where a horizontal section is in a semi-arc shape, an opening width in its horizontal direction is greater than a maximum horizontal width of its inner space, and thus a temperature measuring gun body can be conveniently taken out from an upper part or a lateral side of the base. A magnet 13 is arranged on an inner wall of the placement cavity, a magnetic conductor 14 is arranged in the temperature measuring gun body by facing a gun head of the temperature measuring gun body, when the temperature measuring gun body is placed in the placement cavity 4, the base 1 is magnetically connected with the temperature measuring gun body, the temperature measuring gun body is prevented from falling, meanwhile, the temperature measuring gun body may be more tightly attached to the inner wall of the placement cavity 4, entering of dust is reduced, and an electrical connection with the pin 18 remains stable, which reduces poor contact.

The placement cavity 4 is open, which causes the temperature measuring gun body to be prone to falling, but a magnetic connection by the magnet 13 and the magnetic conductor 14 cooperates with the wireless charging mode, which may quickly fix the temperature measuring gun body in the placement cavity 4 more stably, makes up for a drawback of wireless charging without contact feedback of the pin 18, and makes it convenient for a user to blind plug. In other embodiments, the magnet 13 may be also placed in the temperature measuring gun as long as the base 1 can be magnetically fixed to the temperature measuring gun body.

An operating principle of the present application is that: by arranging the placement cavity 4, a lower end of the temperature measuring gun may be placed in the placement cavity 4 and supported by base side walls 2, and as an inner wall of the placement cavity 4 is arranged obliquely, the temperature measuring gun is placed obliquely and uprightly, which is not prone to falling and convenient to take for use; through the base 1, an effect on uprightly supporting the temperature measuring gun can be achieved; meanwhile, after the temperature measuring gun is placed in the placement cavity 4, a charging port of the temperature measuring gun is in abutting joint with a charging interface 6, or a receiving coil of the temperature measuring gun is shortened to be close to the wireless charging coil 11, so that the temperature measuring gun can be charged; since a winding cavity 8 is formed in a lower surface of a base bottom 3, a charging cable 7 may be winded on a winding post 9 for taking up the charging cable 7; meanwhile, the charging cable 7 can also be prevented from slipping off and becoming scattered by using the limiting member 10; and the base 1 is placed more stably by making a soft rubber pad 5 contact with a desktop.

### Embodiment 3:

A temperature measuring gun has a difference from Embodiment 1 that: an environment detector 17 configured to measure environment parameters is arranged on a temperature measuring gun body, the environment parameters include an air temperature, a relative air humidity, an oxygen content of air, a carbon dioxide content of air, a formaldehyde content of air, PM2.5, an ambient noise intensity and the like, the environment detector 17 is preferably a sensor capable of detecting at least one of the above environment parameters, for example, a temperature and humidity sensor and the like, and the environment detector 17 is arranged in a position, not attached to an inner wall of a placement cavity and capable of directly contacting with air, on the temperature measuring gun body, preferably, in a position below a gun head of the temperature measuring gun body or a position, close to the gun head, of a top end of a handle of the temperature measuring gun body, which can prevent dust from entering and prevent user's fingers from interfering with parameter detection when held by a user.

A display panel 15 is arranged on a side of a back of the temperature measuring gun body away from the gun head, the display panel 15 may adopt an LCD, an OLED or a nixie tube, the display panel 15 is in signal connection with an MCU built in the temperature measuring gun body, the MCU reads an electrical signal converted from an object temperature, a human body temperature or an environment parameter detected by an infrared sensor built in the temperature measuring gun body, information display is performed through the display panel 15, display of readings of the object temperature, the human body temperature and the environment parameter is completed on the display panel 15, and thus more spaces are provided for hand holding while cost is reduced to improve man-machine experience. Besides, an inner wall of a placement cavity 4 is oblique, so the display panel 15 has an appropriate elevation angle, and when the temperature measuring gun body is put on a desktop together with a base 1, the display panel 15 directly faces a human face, which makes it convenient for a user to read the environment parameters.

A mode switching module is arranged on the temperature measuring gun body and the base 1 and is configured to control the display panel 15 to be switched to a main mode in which the corresponding object detection temperature and human body detection temperature are displayed and an auxiliary mode in which the corresponding environment parameters are displayed, and time, alarm clock information, a memo and the like may also be displayed in the auxiliary mode. Under detection of a temperature of an object or a human body by the user, the display panel 15 may display the corresponding object temperature and human body temperature; and when the user does not need to read the detected object or human body temperature, the display panel 15 may display the environment parameters, the time, the alarm clock information, the memo and the like in a normal state, so that the user can conveniently know the current environment parameters, air quality, a clock, matters and the like and take targeted environment regulation and other measures. When the air temperature is high, the object temperature and the human body temperature are also high, especially an object surface temperature measured by the temperature measuring gun, the air temperature included in the environment parameters may also be used as a reference for the body temperature and the object temperature, namely, a computational logic may be adjusted for the body temperature and the object temperature according to a room temperature so that computed temperatures approach actual temperatures of a human body and an object, and accuracy of temperature feedback is improved.

Specifically, the mode switching module may adopt a single chip microcomputer and is connected with a delay module, the delay module may also adopt a single chip microcomputer, and the mode switching module is connected with a charging module. When the mode switching module does not detect a charging signal from the charging module, namely, when the temperature measuring gun is not in a charging state, the mode switching module controls the temperature measuring gun body to enter a sleep mode, the display panel 15 is closed or a display brightness thereof is turned down, after the user triggers a detection switch 16 configured to start a temperature detection, the mode switching module controls the temperature measuring gun body to be switched to the main mode, and in this case, an MCU of the temperature measuring gun displays the current detected object temperature or human body temperature in response to an electrical signal of a sensor. The delay module is connected to the MCU of the temperature measuring gun and is configured to start timekeeping in response to an electrical signal of the detection switch and send a delay signal to the mode switching module after a set duration passes, and the mode switching module controls the display panel to display the environment parameters detected by the environment detector 17 in response to the delay signal and controls the temperature measuring gun body to enter the sleep mode again after a set period of time passes. When an electric quantity of a battery built in the temperature measuring gun body is lower than a set threshold, for example, 30%, the mode switching module will not control the display panel to display the environment parameters detected by the environment detector 17 in response to the delay signal.

When the mode switching module detects the charging signal from the charging module, namely, the temperature measuring gun is in the charging state, the mode switching module controls the temperature measuring gun body to be switched to the auxiliary mode, that is, the display panel 15 is controlled to display the environment parameters detected by the environment detector 17. A conventional temperature measuring gun is quite low in use frequency by the user, especially a household temperature measuring gun, which is used usually in the case of feeling physically sick, the use frequency is usually in a unit of month, quarter or even year, causing serious waste of resources and poor user experience. Through the mode switching module, when the user does not need to detect the object or human body temperature, the temperature measuring gun may be put back in a placement cavity of a base, in this case, it can be guaranteed that the temperature measuring gun remains in a charged state all the time without waiting in use, and convenient to take for use at any time, moreover, the user can conveniently observe the current environment parameters and air quality, and even the clock, an alarm, the memo and the like, an idleness ratio of the temperature measuring gun is reduced, a resource utilization ratio is improved, and application scenes are widened.

The above description is only exemplary specific implementations of the present application, but the protection scope of the present application is not limited to this, and equivalent replacements or modifications made by any of those skilled in the art according to the technical solutions of the present application and the inventive concept within the technical scope disclosed by the present application are covered in the protection scope of the present application, which is defined by the appended claims.

## Claims

1. A temperature measuring gun comprises a temperature measuring gun body and a temperature measuring gun base charging structure that comprises a base (1),
a base bottom (3)
integrally formed on a lower side of the base (1), a placement cavity (4) formed in one side of an upper portion of the base (1), base side walls (2) arranged on side surfaces of the base (1), a charging module arranged in the placement cavity (4), and a charging cable (7) extending out of the base bottom (3);
**characterized in that**
the placement cavity (4) is open, where a horizontal section is in a semi-arc shape, an opening width in its horizontal direction is greater than a maximum horizontal width of its inner space;
a wireless charging coil (11) is arranged in the base (1) and is electrically connected with the charging cable (7);
a receiving coil is arranged on a surface of the temperature measuring gun, and, when the temperature measuring gun body is placed in the placement cavity (4), the receiving coil is close to the wireless charging coil (11), so as to cause the temperature measuring gun to be charged in real time;
a magnetic conductor (14) is arranged in the temperature measuring gun body on a side, facing a gun head of the temperature measuring gun body, and a magnet (13) is arranged on a side of the base (1) close to the placement cavity (4), and the base is magnetically connected with the temperature measuring gun body when the temperature measuring gun body is placed in the placement cavity (4), so as to cause the temperature measuring gun body to be quickly fixed in the placement cavity (4) and cooperate with the wireless charging mode.

2. The temperature measuring gun according to claim 1, **characterized in that** the temperature measuring gun comprises a sensor configured to measure an environmental parameter, the sensor is connected with the base (1) or the temperature measuring gun body, a display panel (15) capable of displaying an object detection temperature, a human body detection temperature, time, alarm clock information or the environmental parameter is arranged on a back of the temperature measuring gun body away from the gun head of the temperature measuring gun body, and the display panel (15) is connected to the sensor to display a current environmental parameter.

3. The temperature measuring gun according to claim 2, **characterized in that** the temperature measuring gun body is provided with a mode switching module, and the mode switching module is connected to a charging module and is configured to control the display panel (15) to be switched to display the time and/or the alarm clock information and/or the environmental parameter in response to a charging signal of the charging module.

4. The temperature measuring gun according to claim 3, **characterized in that** the mode switching module is connected with a delay module, the delay module starts timekeeping in response to a control signal for starting an object temperature or human body temperature detection and outputs a delay signal after a set duration passes, and the mode switching module controls the display panel (15) to display the time and/or the alarm clock information and/or the environmental parameter in response to the delay signal.

5. The temperature measuring gun according to claim 1, **characterized in that** an inner wall of the placement cavity (4) is arranged obliquely, and an oblique direction faces towards a run-through direction of the placement cavity (4).

6. The temperature measuring gun according to claim 1, **characterized in that** a winding cavity (8) is formed in a lower surface of the base bottom (3), a winding post (9) is fixedly arranged in the winding cavity (8), and a limiting member (10) is fixedly arranged on a lower side surface of the winding post (9).

7. The temperature measuring gun according to claim 6, **characterized in that** a soft rubber pad (5) is fixedly connected with a lower side surface of the limiting member (10), and a lower surface of the soft rubber pad (5) is flush with the lower surface of the base bottom (3).

8. The temperature measuring gun according to claim 1, **characterized in that** a battery is arranged in the base (1).

## Patentansprüche

1. Temperaturmesspistole, umfassend einen Temperaturmesspistolenkörper und eine Ladestruktur für eine Temperaturmesspistolenbasis, die eine Basis (1), einen an einer Unterseite der Basis (1) einstückig angeformten Basisboden (3), einen an einer Seite eines oberen Abschnitts der Basis (1) ausgebildeten Aufnahmeraum (4), an Seitenflächen der Basis (1) angeordnete Basisseitenwände (2), ein in dem Aufnahmeraum (4) angeordnetes Lademodul und ein aus dem Basisboden (3) herausgeführtes Ladekabel (7) umfasst;
**dadurch gekennzeichnet, dass** der Aufnahmeraum (4) offen ist, wobei ein horizontaler Querschnitt halbbogenförmig ist, und wobei eine Öffnungsbreite in seiner horizontalen Richtung größer als eine maximale horizontale Breite seines Innenraums ist;
wobei in der Basis (1) eine Spule (11) zum drahtlosen Laden angeordnet ist, die mit dem Ladekabel (7) elektrisch verbunden ist;
wobei an einer Oberfläche der Temperaturmesspistole eine Empfangsspule angeordnet ist und sich die Empfangsspule, wenn der Temperaturmesspistolenkörper in dem Aufnahmeraum (4) platziert ist, in der Nähe der Spule (11) zum drahtlosen Laden befindet, sodass die Temperaturmesspistole in Echtzeit geladen wird;
wobei in dem Temperaturmesspistolenkörper an einer einem Pistolenkopf des Temperaturmesspistolenkörpers zugewandten Seite ein magnetisch leitendes Element (14) angeordnet ist und an einer dem Aufnahmeraum (4) nahe gelegenen Seite der Basis (1) ein Magnet (13) angeordnet ist, wobei die Basis mit dem Temperaturmesspistolenkörper magnetisch verbunden ist, wenn der Temperaturmesspistolenkörper in dem Aufnahmeraum (4) platziert ist, um den Temperaturmesspistolenkörper schnell in dem Aufnahmeraum (4) zu fixieren und mit dem drahtlosen Lademodus zusammenzuwirken.

2. Temperaturmesspistole nach Anspruch 1, **dadurch gekennzeichnet, dass** die Temperaturmesspistole einen Sensor umfasst, der dazu eingerichtet ist, einen Umgebungsparameter zu messen, wobei der Sensor mit der Basis (1) oder dem Temperaturmesspistolenkörper verbunden ist, und wobei an einer von dem Pistolenkopf des Temperaturmesspistolenkörpers abgewandten Rückseite des Temperaturmesspistolenkörpers ein Anzeigepanel (15) angeordnet ist, das in der Lage ist, eine gemessene Objekttemperatur, eine gemessene menschliche Körpertemperatur, die Uhrzeit, Weckerinformationen oder den Umgebungsparameter anzuzeigen, und wobei das Anzeigepanel (15) mit dem Sensor verbunden ist, um einen aktuellen Umgebungsparameter anzuzeigen.

3. Temperaturmesspistole nach Anspruch 2, **dadurch gekennzeichnet, dass** der Temperaturmesspistolenkörper mit einem Modusumschaltmodul versehen ist, wobei das Modusumschaltmodul mit einem Lademodul verbunden und dazu eingerichtet ist, das Anzeigepanel (15) als Reaktion auf ein Ladesignal des Lademoduls so anzusteuern, dass es auf die Anzeige der Uhrzeit und/oder der Weckerinformationen und/oder des Umgebungsparameters umgeschaltet wird.

4. Temperaturmesspistole nach Anspruch 3, **dadurch gekennzeichnet, dass** das Modusumschaltmodul mit einem Verzögerungsmodul verbunden ist, wobei das Verzögerungsmodul als Reaktion auf ein Steuersignal zum Starten einer Erfassung einer Objekttemperatur oder einer menschlichen Körpertemperatur eine Zeitmessung startet und nach Ablauf einer festgelegten Zeitdauer ein Verzögerungssignal ausgibt, und wobei das Modusumschaltmodul das Anzeigepanel (15) als Reaktion auf das Verzögerungssignal so ansteuert, dass es die Uhrzeit und/oder die Weckerinformationen und/oder den Umgebungsparameter anzeigt.

5. Temperaturmesspistole nach Anspruch 1, **dadurch gekennzeichnet, dass** eine Innenwand des Aufnahmeraums (4) geneigt angeordnet ist, wobei die Neigungsrichtung einer Durchgangsrichtung des Aufnahmeraums (4) zugewandt ist.

6. Temperaturmesspistole nach Anspruch 1, **dadurch gekennzeichnet, dass** in einer unteren Oberfläche des Basisbodens (3) ein Aufwickelraum (8) ausgebildet ist, wobei in dem Aufwickelraum (8) ein Aufwickelzapfen (9) fest angeordnet ist und an einer unteren Seitenfläche des Aufwickelzapfens (9) ein Begrenzungselement (10) fest angeordnet ist.

7. Temperaturmesspistole nach Anspruch 6, **dadurch gekennzeichnet, dass** eine weiche Gummiauflage (5) mit einer unteren Seitenfläche des Begrenzungselements (10) fest verbunden ist, wobei eine untere Oberfläche der weichen Gummiauflage (5) mit der unteren Oberfläche des Basisbodens (3) bündig ist.

8. Temperaturmesspistole nach Anspruch 1, **dadurch gekennzeichnet, dass** in der Basis (1) eine Batterie angeordnet ist.

## Revendications

1. Pistolet de mesure de température, comprenant un corps de pistolet de mesure de température et une structure de chargement de base du pistolet de mesure de température, comprenant une base (1) et un fond de base (3) formé intégralement sur le côté inférieur de la base (1), une cavité de positionnement (4) formée d'un côté d'une partie supérieure de la base (1), des parois latérales de la base (2) disposées sur les côtés de la base (1), un module de charge disposé dans la cavité de positionnement (4), et un câble de charge (7) s'étendant hors du bas de la base (3) ;
caractérisé en ce
la cavité de positionnement (4) est ouverte, une section horizontale étant en forme de demi-arc, une largeur d'ouverture dans sa direction horizontale étant supérieure à la largeur horizontale maximale de son espace intérieur ;
une bobine de recharge sans fil (11) est disposée dans la base (1) et est reliée électriquement au câble de charge (7) ;
une bobine réceptrice est disposée sur une surface du pistolet de mesure de température et, lorsque le corps du pistolet de mesure de température est placé dans la cavité de positionnement (4), la bobine réceptrice est proche de la bobine de charge sans fil (11), de sorte que le pistolet de mesure de température soit chargé en temps réel ;
un conducteur magnétique (14) est disposé sur un côté du corps du pistolet de mesure de température, face à une tête du pistolet de mesure de température, et un aimant (13) est placé sur un côté de la base (1) proche de la cavité de positionnement (4), et la base est connectée magnétiquement au corps du pistolet de mesure de température lorsque le corps du pistolet de mesure de température est placé dans la cavité de positionnement (4), afin de fixer rapidement le corps du pistolet de mesure de température dans la cavité de positionnement (4) et de coopérer avec le mode de charge sans fil.

2. Le pistolet de mesure de température selon la revendication 1, **caractérisé en ce que** le pistolet de mesure de température comprend un capteur configuré pour mesurer un paramètre environnemental, le capteur est relié à la base (1) ou au corps du pistolet de mesure de température, un écran d'affichage (15) capable d'afficher la température de détection d'un objet, la température de détection du corps humain, l'heure, les informations du réveil ou le paramètre environnemental est disposé à l'arrière du corps du pistolet de mesure de température, à l'écart de la tête du pistolet du corps du pistolet de mesure de température, et l'écran d'affichage (15) est connecté au capteur pour afficher un paramètre environnemental actuel.

3. Le pistolet de mesure de température selon la revendication 2, **caractérisé en ce que** le corps du pistolet de mesure de température est équipé d'un module de commutation de mode, et que le module de commutation de mode est connecté à un module de charge et est configuré pour commander l'écran d'affichage (15) pour commuter afin d'afficher l'heure et/ou les informations du réveil et/ou le paramètre environnemental en réponse à un signal de charge du module de charge.

4. Le pistolet de mesure de température selon la revendication 3, **caractérisé en ce que** le module de commutation de mode est connecté à un module de délai, le module de délai commence à mesurer le temps en réponse à un signal de commande pour démarrer la température d'un objet ou la détection de température corporelle humaine et émet un signal de délai après une durée définie, et le module de commutation de mode commande l'écran d'affichage (15) pour afficher l'heure et/ou les informations du réveil et/ou le paramètre environnemental en réponse au signal de délai.

5. Le pistolet de mesure de température selon la revendication 1, **caractérisé en ce qu'**une paroi intérieure de la cavité de positionnement (4) est disposée obliquement, et qu'une direction oblique est orientée vers une direction de passage de la cavité de positionnement (4).

6. Le pistolet de mesure de température selon la revendication 1, **caractérisé en ce qu'**une cavité d'enroulement (8) est formée à une surface inférieure du fond de la base (3), un montant d'enroulement (9) est fixement disposé dans la cavité d'enroulement (8), et un élément limiteur (10) est fixement disposé sur une surface inférieure du montant d'enroulement (9).

7. Le pistolet de mesure de température selon la revendication 6, **caractérisé en ce qu'**un tampon en caoutchouc souple (5) est fixement relié à une surface inférieure de l'élément limiteur (10), et qu'une surface inférieure du tampon en caoutchouc souple (5) affleure la surface inférieure du fond de la base (3).

8. Le pistolet de mesure de température selon la revendication 1, **caractérisé en ce qu'**une batterie est disposée dans la base (1).
